(19) Europäisches Patentamt
European Patent Office
Office européen des brevets

(11) **EP 4 657 854 A1**

(12) **EUROPEAN PATENT APPLICATION**
published in accordance with Art. 153(4) EPC

(43) Date of publication:
**03.12.2025 Bulletin 2025/49**

(21) Application number: **24819517.4**

(22) Date of filing: **23.05.2024**

(51) International Patent Classification (IPC):
*H04N 19/124* (2014.01)   *H04N 19/70* (2014.01)
*H04N 19/19* (2014.01)   *H04N 19/147* (2014.01)
*H04N 19/184* (2014.01)

(52) Cooperative Patent Classification (CPC):
**H04N 19/124; H04N 19/147; H04N 19/184;
H04N 19/19; H04N 19/70**

(86) International application number:
**PCT/KR2024/007011**

(87) International publication number:
**WO 2024/253365 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.06.2023  KR 20230074112
22.11.2023  KR 20230163275**

(71) Applicants:
• **Hyundai Motor Company
Seoul 06797 (KR)**

• **Kia Corporation
Seoul 06797 (KR)**

(72) Inventors:
• **CHOI, Jungah
Hwaseong-si Gyeonggi-do 18280 (KR)**
• **HEO, Jin
Hwaseong-si Gyeonggi-do 18280 (KR)**
• **PARK, Seung Wook
Hwaseong-si Gyeonggi-do 18280 (KR)**

(74) Representative: **Isarpatent
Patent- und Rechtsanwälte
Barth Hassa Peckmann & Partner mbB
Friedrichstraße 31
80801 München (DE)**

(54) **IMAGE ENCODING/DECODING METHOD, DEVICE, AND RECORDING MEDIUM FOR STORING BITSTREAM**

(57)    According to an embodiment of the present invention, a method for decoding an image is provided including deriving a first quantization index, deriving a second quantization index by shifting the first quantization index, deriving a first reconstructed transformed coefficient and a second reconstructed transformed coefficient by performing dequantization on the first quantization index and the second quantization index respectively, and generating final reconstructed transformed coefficients by applying a first weight and a second weight to the first reconstructed transformed coefficient and the second reconstructed transformed coefficient respectively.

FIG. 7

**Description**

**Technical Field**

The present disclosure relates to an image encoding/decoding method and apparatus and a recording medium for storing a bitstream. More particularly, the present disclosure relates to an image encoding/decoding method and apparatus using a quantization index shifting and a recording medium for storing a bitstream.

**Background Art**

Recently, the demand for high-resolution, high-quality images such as ultra-high definition (UHD) images is increasing in various application fields. As image data becomes higher in resolution and quality, the amount of data increases relatively compared to existing image data. Therefore, when transmitting image data using media such as existing wired and wireless broadband lines or storing image data using existing storage media, the transmission and storage costs increase. In order to solve these problems that occur as image data becomes higher in resolution and quality, high-efficiency image encoding/decoding technology for images with higher resolution and quality is required.

For effective compression of an image, quantization of a residual signal is performed in an image encoding process, and thus image data is lost within a range that is not perceptible to humans. Accordingly, an original residual signal and a reconstructed residual signal subjected to quantization and dequantization are not identical. By applying an encoding tool that minimizes such a difference between an original residual signal and a reconstructed residual signal, an image may be effectively compressed, and the quality degradation of the image may also be mitigated. Accordingly, various methods for minimizing a difference between an original residual signal and a reconstructed residual signal are under discussion.

**Disclosure**

**Technical Problem**

An object of the present disclosure is to provide an image encoding/decoding method and apparatus with improved encoding/decoding efficiency.

In addition, an object of the present disclosure is to provide a recording medium for storing a bitstream generated by an image decoding method or apparatus provided by the present disclosure.

**Technical Solution**

A method for decoding an image according to an embodiment of the present invention may include deriving a first quantization index, deriving a second quantization index by shifting the first quantization index, deriving a first reconstructed transformed coefficient and a second reconstructed transformed coefficient by performing dequantization on the first quantization index and the second quantization index respectively, and generating final reconstructed transformed coefficients by applying a first weight and a second weight to the first reconstructed transformed coefficient and the second reconstructed transformed coefficient respectively.

According to an embodiment, the second quantization index may be derived by shifting the first quantization index by a predetermined integer value.

According to an embodiment, an absolute value of the predetermined integer value may be 1.

According to an embodiment, a sign of the predetermined integer value may be determined to be identical to a sign of the first quantization index.

According to an embodiment, the first weight and the second weight may be determined according to a quantization parameter, a value of the first quantization index, a position of a current block, a size of the current block, a position of a subblock, a position of a sample of the current block or the subblock, and the number of non-zero samples of the current or subblock.

According to an embodiment, the method for decoding the image may further include determining whether or not to shift the first quantization index, and when the first quantization index is determined to be shifted, the second quantization index is derived by shifting the first quantization index.

According to an embodiment, in the determining of whether or not to shift the first quantization index, at least one syntax element indicating whether or not to apply the quantization index shifting may be obtained from a bitstream, and whether or not to shift the first quantization index may be determined based on the at least one syntax element.

According to an embodiment, the at least one syntax element may be encoded in at least one data unit of a video parameter set, a sequence parameter set, a picture parameter set, an adaptive parameter set, a picture header, a slice header, an encoding unit, a transform unit, and a subblock unit.

According to an embodiment, whether or not to shift the first quantization index may be determined based on a quantization parameter.

According to an embodiment, when the quantization parameter has a value corresponding to lossless compression environment or near-lossless compression environment, the shifting of the first quantization index may be determined not to be applied.

According to an embodiment, when the quantization parameter is included in a predetermined quantization parameter range, the shifting of the first quantization index may be determined not to be applied.

According to an embodiment, when an absolute value of the first quantization index is equal to or greater than a predetermined value, the shifting of the first quantization index may be determined not to be applied.

According to an embodiment, whether or not to shift the first quantization index may be determined based on a two-dimensional position of the first quantization index within a block.

According to an embodiment, when an x component of the two-dimensional position of the first quantization index is smaller than an x component of a predetermined reference position and a y component of the two-dimensional position of the first quantization index is smaller than a y component of the predetermined reference position, the shifting of the first quantization index may be determined not to be applied.

According to an embodiment, whether or not to shift the first quantization index may be determined based on a one-dimensional position index of the first quantization index within a block, and the one-dimensional position index may be transformed from a two-dimensional coordinate value according to an arbitrary scanning method.

According to an embodiment, when the one-dimensional position index of the first quantization index is smaller than a predetermined value, the quantization index shifting may be determined not to be applied.

According to an embodiment, whether or not to shift the first quantization index may be determined based on a prediction mode or filtering mode that is applied to a current block.

A method for encoding an image according to an embodiment of the present invention may include obtaining a first quantization index, deriving a second quantization index by shifting the first quantization index, deriving a first reconstructed transformed coefficient and a second reconstructed transformed coefficient by performing dequantization on the first quantization index and the second quantization index respectively, and generating final reconstructed transformed coefficients by applying a first weight and a second weight to the first reconstructed transformed coefficient and the second reconstructed transformed coefficient respectively.

A non-transitory computer-readable recording medium according to an embodiment of the present invention may store a bitstream generated by the method for encoding an image.

A transmission method according to an embodiment of the present invention may transmit a bitstream generated by the method for encoding an image.

The features briefly summarized above with respect to the present invention are provided as an example only to explain the detailed description and are not construed to limit the scope of the present invention.

**Advantageous Effects**

The present invention proposes various embodiments of a method for applying quantization index shifting to quantization of a transformed coefficient and to dequantization of a residual signal.

In addition, the present invention proposes various embodiments of a method for controlling quantization index shifting in lossless/near-lossless compression.

According to the various embodiments, efficiency is improved in quantization and dequantization of video encoding and decoding, and thus overall coding efficiency can be improved.

**Description of Drawings**

FIG. 1 is a block diagram showing a configuration of an encoding apparatus according to an embodiment of the present disclosure.

FIG. 2 is a block diagram showing a configuration of a decoding apparatus according to an embodiment of the present invention.

FIG. 3 is a diagram schematically showing a video coding system to which the present invention is applicable.

FIG. 4 shows an application area of quantization index shifting, which is defined by one reference position, when quantization index shifting is controlled based on a two-dimensional position of a quantization index.

FIG. 5 shows an application area of quantization index shifting, which is defined by two reference positions, when quantization index shifting is controlled based on a two-dimensional position of a quantization index.

FIG. 6 shows an example of a scanning method of a transform block for describing a quantization index shifting control method based on a one-dimensional position index.

FIG. 7 shows an embodiment of a method for generating a transformed coefficient by quantization index shifting.

FIG. 8 illustrates a content streaming system to which an embodiment according to the present disclosure is applicable.

## Best Mode

A method for decoding an image according to an embodiment of the present invention may include deriving a first quantization index, deriving a second quantization index by shifting the first quantization index, deriving a first reconstructed transformed coefficient and a second reconstructed transformed coefficient by performing dequantization on the first quantization index and the second quantization index respectively, and generating final reconstructed transformed coefficients by applying a first weight and a second weight to the first reconstructed transformed coefficient and the second reconstructed transformed coefficient respectively.

## Mode for Invention

The present disclosure may have various modifications and embodiments, and specific embodiments are illustrated in the drawings and described in detail in the detailed description. However, this is not intended to limit the present disclosure to specific embodiments, but should be understood to include all modifications, equivalents, or substitutes included in the spirit and technical scope of the present disclosure. Similar reference numerals in the drawings indicate the same or similar functions throughout various aspects. The shapes and sizes of elements in the drawings may be provided by way of example for a clearer description. The detailed description of the embodiments described below refers to the accompanying drawings, which illustrate specific embodiments by way of example. These embodiments are described in sufficient detail to enable those skilled in the art to practice the embodiments. It should be understood that the various embodiments are different from each other, but are not necessarily mutually exclusive. For example, specific shapes, structures, and characteristics described herein may be implemented in other embodiments without departing from the spirit and scope of the present disclosure with respect to one embodiment. It should also be understood that the positions or arrangements of individual components within each disclosed embodiment may be changed without departing from the spirit and scope of the embodiment. Accordingly, the detailed description set forth below is not intended to be limiting, and the scope of the embodiments is defined only by the appended claims, along with the full scope of equivalents to which such claims are entitled, if properly described.

In the present disclosure, the terms first, second, etc. may be used to describe various components, but the components should not be limited by the terms. The terms are only used for the purpose of distinguishing one component from another. For example, without departing from the scope of the present disclosure, the first component may be referred to as the second component, and similarly, the second component may also be referred to as the first component. The term is and/or includes a combination of a plurality of related described items or any item among a plurality of related described items.

The components shown in the embodiments of the present disclosure are independently depicted to indicate different characteristic functions, and do not mean that each component is formed as a separate hardware or software configuration unit. That is, each component is listed and included as a separate component for convenience of explanation, and at least two of the components may be combined to form a single component, or one component may be divided into multiple components to perform a function, and embodiments in which components are integrated and embodiments in which each component is divided are also included in the scope of the present disclosure as long as they do not deviate from the essence of the present disclosure.

The terminology used in the present disclosure is only used to describe specific embodiments and is not intended to limit the present disclosure. The singular expression includes the plural expression unless the context clearly indicates otherwise. In addition, some components of the present disclosure are not essential components that perform essential functions in the present disclosure and may be optional components only for improving performance. The present disclosure may be implemented by including only essential components for implementing the essence of the present disclosure excluding components only used for improving performance, and a structure including only essential components excluding optional components only used for improving performance is also included in the scope of the present disclosure.

In an embodiment, the term "at least one" may mean one of a number greater than or equal to 1, such as 1, 2, 3, and 4. In an embodiment, the term "a plurality of" may mean one of a number greater than or equal to 2, such as 2, 3, and 4.

Hereinafter, embodiments of the present disclosure will be specifically described with reference to the drawings. In describing the embodiments of this specification, if it is determined that a detailed description of a related known configuration or function may obscure the subject matter of this specification, the detailed description will be omitted, and the same reference numerals will be used for the same components in the drawings, and repeated descriptions of the same components will be omitted.

Description of terms

Hereinafter, "image" may mean one picture constituting a video, and may also refer to the video itself. For example, "encoding and/or decoding of an image" may mean "encoding and/or decoding of a video," and may also mean "encoding and/or decoding of one of images constituting the video."

Hereinafter, "moving image" and "video" may be used with the same meaning and may be used interchangeably. In addition, a target image may be an encoding target image that is a target of encoding and/or a decoding target image that is a target of decoding. In addition, the target image may be an input image input to an encoding apparatus and may be an input image input to a decoding apparatus. Here, the target image may have the same meaning as a current image.

Hereinafter, "image", "picture", "frame" and "screen" may be used with the same meaning and may be used interchangeably.

Hereinafter, a "target block" may be an encoding target block that is a target of encoding and/or a decoding target block that is a target of decoding. In addition, the target block may be a current block that is a target of current encoding and/or decoding. For example, "target block" and "current block" may be used with the same meaning and may be used interchangeably.

Hereinafter, "block" and "unit" may be used with the same meaning and may be used interchangeably. In addition, "unit" may mean including a luma component block and a chroma component block corresponding thereto in order to distinguish it from a block. For example, a coding tree unit (CTU) may be composed of one luma component (Y) coding tree block (CTB) and two chroma component (Cb, Cr) coding tree blocks related to it.

Hereinafter, "sample", "picture element" and "pixel" may be used with the same meaning and may be used interchangeably. Herein, a sample may represent a basic unit that constitutes a block.

Hereinafter, "inter" and "inter-screen" may be used with the same meaning and can be used interchangeably.

Hereinafter, "intra" and "in-screen" may be used with the same meaning and can be used interchangeably.

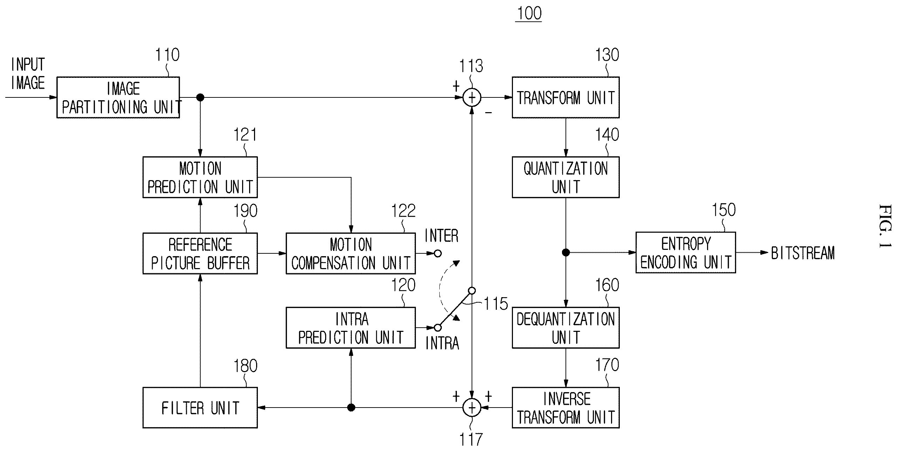

FIG. 1 is a block diagram showing a configuration of an encoding apparatus according to an embodiment of the present disclosure.

The encoding apparatus 100 may be an encoder, a video encoding apparatus, or an image encoding apparatus. A video may include one or more images. The encoding apparatus 100 may sequentially encode one or more images.

Referring to FIG. 1, the encoding apparatus 100 may include an image partitioning unit 110, an intra prediction unit 120, a motion prediction unit 121, a motion compensation unit 122, a switch 115, a subtractor 113, a transform unit 130, a quantization unit 140, an entropy encoding unit 150, a dequantization unit 160, an inverse transform unit 170, an adder 117, a filter unit 180 and a reference picture buffer 190.

In addition, the encoding apparatus 100 may generate a bitstream including information encoded through encoding of an input image, and output the generated bitstream. The generated bitstream may be stored in a computer-readable recording medium, or may be streamed through a wired/wireless transmission medium.

The image partitioning unit 110 may partition the input image into various forms to increase the efficiency of video encoding/decoding. That is, the input video is composed of multiple pictures, and one picture may be hierarchically partitioned and processed for compression efficiency, parallel processing, etc. For example, one picture may be partitioned into one or multiple tiles or slices, and then partitioned again into multiple CTUs (Coding Tree Units). Alternatively, one picture may first be partitioned into multiple sub-pictures defined as groups of rectangular slices, and each sub-picture may be partitioned into the tiles/slices. Here, the sub-picture may be utilized to support the function of partially independently encoding/decoding and transmitting the picture. Since multiple sub-pictures may be individually reconstructed, it has the advantage of easy editing in applications that configure multi-channel inputs into one picture. In addition, a tile may be divided horizontally to generate bricks. Here, the brick may be utilized as the basic unit of parallel processing within the picture. In addition, one CTU may be recursively partitioned into quad trees (QTs), and the terminal node of the partition may be defined as a CU (Coding Unit). The CU may be partitioned into a PU (Prediction Unit), which is a prediction unit, and a TU (Transform Unit), which is a transform unit, to perform prediction and partition. Meanwhile, the CU may be utilized as the prediction unit and/or the transform unit itself. Here, for flexible partition, each CTU may be recursively partitioned into multi-type trees (MTTs) as well as quad trees (QTs). The partition of the CTU into multi-type trees may start from the terminal node of the QT, and the MTT may be composed of a binary tree (BT) and a triple tree (TT). For example, the MTT structure may be classified into a vertical binary split mode (SPLIT_BT_VER), a horizontal binary split mode (SPLIT_BT_HOR), a vertical ternary split mode (SPLIT_TT_VER), and a horizontal ternary split mode (SPLIT_TT_HOR). In addition, a minimum block size (MinQTSize) of the quad tree of the luma block during partition may be set to 16x16, a maximum block size (MaxBtSize) of the binary tree may be set to 128x128, and a maximum block size (MaxTtSize) of the triple tree may be set to 64x64. In addition, a minimum block size (MinBtSize) of the binary tree and a minimum block size (MinTtSize) of the triple tree may be specified as 4x4, and the maximum depth (MaxMttDepth) of the multi-type tree may be specified as 4. In addition, in order to increase the encoding efficiency of the I slice, a dual tree that differently uses CTU partition structures of luma and chroma components may be applied. On the other hand, in P and B slices, the luma and chroma CTBs (Coding Tree Blocks) within the CTU may be partitioned into a single tree that shares the coding tree structure.

The encoding apparatus 100 may perform encoding on the input image in the intra mode and/or the inter mode. Alternatively, the encoding apparatus 100 may perform encoding on the input image in a third mode (e.g., IBC mode, Palette mode, etc.) other than the intra mode and the inter mode. However, if the third mode has functional characteristics similar to the intra mode or the inter mode, it may be classified as the intra mode or the inter mode for convenience of explanation. In the present disclosure, the third mode will be classified and described separately only when a specific description thereof is required.

When the intra mode is used as the prediction mode, the switch 115 may be switched to intra, and when the inter mode is used as the prediction mode, the switch 115 may be switched to inter. Here, the intra mode may mean an intra prediction mode, and the inter mode may mean an inter prediction mode. The encoding apparatus 100 may generate a prediction block for an input block of the input image. In addition, the encoding apparatus 100 may encode a residual block using a residual of the input block and the prediction block after the prediction block is generated. The input image may be referred to as a current image which is a current encoding target. The input block may be referred to as a current block which is a current encoding target or an encoding target block.

When a prediction mode is an intra mode, the intra prediction unit 120 may use a sample of a block that has been already encoded/decoded around a current block as a reference sample. The intra prediction unit 120 may perform spatial prediction for the current block by using the reference sample, or generate prediction samples of an input block through spatial prediction. Herein, the intra prediction may mean in-screen prediction.

As an intra prediction method, non-directional prediction modes such as DC mode and Planar mode and directional prediction modes (e.g., 65 directions) may be applied. Here, the intra prediction method may be expressed as an intra prediction mode or an in-screen prediction mode.

When a prediction mode is an inter mode, the motion prediction unit 121 may retrieve a region that best matches with an input block from a reference image in a motion prediction process, and derive a motion vector by using the retrieved region. In this case, a search region may be used as the region. The reference image may be stored in the reference picture buffer 190. Here, when encoding/decoding for the reference image is performed, it may be stored in the reference picture buffer 190.

The motion compensation unit 122 may generate a prediction block of the current block by performing motion compensation using a motion vector. Herein, inter prediction may mean inter-screen prediction or motion compensation.

When the value of the motion vector is not an integer, the motion prediction unit 121 and the motion compensation unit 122 may generate the prediction block by applying an interpolation filter to a partial region of the reference picture. In order to perform inter prediction or motion compensation, it may be determined whether the motion prediction and motion compensation mode of the prediction unit included in the coding unit is one of a skip mode, a merge mode, an advanced motion vector prediction (AMVP) mode, and an intra block copy (IBC) mode based on the coding unit and inter prediction or motion compensation may be performed according to each mode.

In addition, based on the above inter prediction method, an AFFINE mode of sub-PU based prediction, an SbTMVP (Subblock-based Temporal Motion Vector Prediction) mode, an MMVD (Merge with MVD) mode of PU-based prediction, and a GPM (Geometric Partitioning Mode) mode may be applied. In addition, in order to improve the performance of each mode, HMVP (History based MVP), PAMVP (Pairwise Average MVP), CIIP (Combined Intra/Inter Prediction), AMVR (Adaptive Motion Vector Resolution), BDOF (Bi-Directional Optical-Flow), BCW (Bi-predictive with CU Weights), LIC (Local Illumination Compensation), TM (Template Matching), OBMC (Overlapped Block Motion Compensation), etc. may be applied.

The subtractor 113 may generate a residual block by using a difference between an input block and a prediction block. The residual block may be called a residual signal. The residual signal may mean a difference between an original signal and a prediction signal. Alternatively, the residual signal may be a signal generated by transforming or quantizing, or transforming and quantizing a difference between the original signal and the prediction signal. The residual block may be a residual signal of a block unit.

The transform unit 130 may generate a transform coefficient by performing transform on a residual block, and output the generated transform coefficient. Herein, the transform coefficient may be a coefficient value generated by performing transform on the residual block. When a transform skip mode is applied, the transform unit 130 may skip transform of the residual block.

A quantized level may be generated by applying quantization to the transform coefficient or to the residual signal. Hereinafter, the quantized level may also be called a transform coefficient in embodiments.

For example, a 4x4 luma residual block generated through intra prediction is transformed using a base vector based on DST (Discrete Sine Transform), and transform may be performed on the remaining residual block using a base vector based on DCT (Discrete Cosine Transform). In addition, a transform block is partitioned into a quad tree shape for one block using RQT (Residual Quad Tree) technology, and after performing transform and quantization on each transformed block partitioned through RQT, a coded block flag (cbf) may be transmitted to increase encoding efficiency when all coefficients become 0.

As another alternative, the Multiple Transform Selection (MTS) technique, which selectively uses multiple transform bases to perform transform, may be applied. That is, instead of partitioning a CU into TUs through RQT, a function similar to TU partition may be performed through the sub-block Transform (SBT) technique. Specifically, SBT is applied only to inter prediction blocks, and unlike RQT, the current block may be partitioned into ½ or ¼ sizes in the vertical or horizontal direction and then transform may be performed on only one of the blocks. For example, if it is partitioned vertically, transform may be performed on the leftmost or rightmost block, and if it is partitioned horizontally, transform may be performed on the topmost or bottommost block.

In addition, LFNST (Low Frequency Non-Separable Transform), a secondary transform technique that additionally transforms the residual signal transformed into the frequency domain through DCT or DST, may be applied. LFNST additionally performs transform on the low-frequency region of 4x4 or 8x8 in the upper left, so that the residual coefficients may be concentrated in the upper left.

The quantization unit 140 may generate a quantized level by quantizing the transform coefficient or the residual signal according to a quantization parameter (QP), and output the generated quantized level. Herein, the quantization unit 140 may quantize the transform coefficient by using a quantization matrix.

For example, a quantizer using QP values of 0 to 51 may be used. Alternatively, if the image size is larger and high encoding efficiency is required, the QP of 0 to 63 may be used. Also, a DQ (Dependent Quantization) method using two quantizers instead of one quantizer may be applied. DQ performs quantization using two quantizers (e.g., Q0 and Q1), but even without signaling information about the use of a specific quantizer, the quantizer to be used for the next transform coefficient may be selected based on the current state through a state transition model.

The entropy encoding unit 150 may generate a bitstream by performing entropy encoding according to a probability distribution on values calculated by the quantization unit 140 or on coding parameter values calculated when performing encoding, and output the bitstream. The entropy encoding unit 150 may perform entropy encoding of information on a sample of an image and information for decoding an image. For example, the information for decoding the image may include a syntax element.

When entropy encoding is applied, symbols are represented so that a smaller number of bits are assigned to a symbol having a high occurrence probability and a larger number of bits are assigned to a symbol having a low occurrence probability, and thus, the size of bit stream for symbols to be encoded may be decreased. The entropy encoding unit 150 may use an encoding method, such as exponential Golomb, context-adaptive variable length coding (CAVLC), context-adaptive binary arithmetic coding (CABAC), etc., for entropy encoding. For example, the entropy encoding unit 150 may perform entropy encoding by using a variable length coding/code (VLC) table. In addition, the entropy encoding unit 150 may derive a binarization method of a target symbol and a probability model of a target symbol/bin, and perform arithmetic coding by using the derived binarization method, and a context model.

In relation to this, when applying CABAC, in order to reduce the size of the probability table stored in the decoding apparatus, a table probability update method may be changed to a table update method using a simple equation and applied. In addition, two different probability models may be used to obtain more accurate symbol probability values.

In order to encode a transform coefficient level (quantized level), the entropy encoding unit 150 may change a two-dimensional block form coefficient into a one-dimensional vector form through a transform coefficient scanning method.

A coding parameter may include information (flag, index, etc.) encoded in the encoding apparatus 100 and signaled to the decoding apparatus 200, such as syntax element, and information derived in the encoding or decoding process, and may mean information required when encoding or decoding an image.

Herein, signaling the flag or index may mean that a corresponding flag or index is entropy encoded and included in a bitstream in an encoder, and may mean that the corresponding flag or index is entropy decoded from a bitstream in a decoder.

The encoded current image may be used as a reference image for another image to be processed later. Therefore, the encoding apparatus 100 may reconstruct or decode the encoded current image again and store the reconstructed or decoded image as a reference image in the reference picture buffer 190.

A quantized level may be dequantized in the dequantization unit 160, or may be inversely transformed in the inverse transform unit 170. A dequantized and/or inversely transformed coefficient may be added with a prediction block through the adder 117. Herein, the dequantized and/or inversely transformed coefficient may mean a coefficient on which at least one of dequantization and inverse transform is performed, and may mean a reconstructed residual block. The dequantization unit 160 and the inverse transform unit 170 may be performed as an inverse process of the quantization unit 140 and the transform unit 130.

The reconstructed block may pass through the filter unit 180. The filter unit 180 may apply a deblocking filter, a sample adaptive offset (SAO), an adaptive loop filter (ALF), a bilateral filter (BIF), luma mapping with chroma scaling (LMCS), etc. to a reconstructed sample, a reconstructed block or a reconstructed image using all or some filtering techniques. The filter unit 180 may be called an in-loop filter. In this case, the in-loop filter is also used as name excluding LMCS.

The deblocking filter may remove block distortion generated in boundaries between blocks. In order to determine whether or not to apply a deblocking filter, whether or not to apply a deblocking filter to a current block may be determined based on samples included in several rows or columns which are included in the block. When a deblocking filter is applied to a block, a different filter may be applied according to a required deblocking filtering strength.

In order to compensate for encoding error using sample adaptive offset, a proper offset value may be added to a sample value. The sample adaptive offset may correct an offset of a deblocked image from an original image by a sample unit. A method of partitioning a sample included in an image into a predetermined number of regions, determining a region to which an offset is applied, and applying the offset to the determined region, or a method of applying an offset in consideration of edge information on each sample may be used.

A bilateral filter (BIF) may also correct the offset from the original image on a sample-by-sample basis for the image on which deblocking has been performed.

The adaptive loop filter may perform filtering based on a comparison result of the reconstructed image and the original image. Samples included in an image may be partitioned into predetermined groups, a filter to be applied to each group may be determined, and differential filtering may be performed for each group. Information of whether or not to apply the ALF may be signaled by coding units (CUs), and a form and coefficient of the adaptive loop filter to be applied to each block may vary.

In LMCS (Luma Mapping with Chroma Scaling), luma mapping (LM) means remapping luma values through a piece-wise linear model, and chroma scaling (CS) means a technique for scaling the residual value of the chroma component according to the average luma value of the prediction signal. In particular, LMCS may be utilized as an HDR correction technique that reflects the characteristics of HDR (High Dynamic Range) images.

The reconstructed block or the reconstructed image having passed through the filter unit 180 may be stored in the reference picture buffer 190. A reconstructed block that has passed through the filter unit 180 may be a part of a reference image. That is, the reference image is a reconstructed image composed of reconstructed blocks that have passed through the filter unit 180. The stored reference image may be used later in inter prediction or motion compensation.

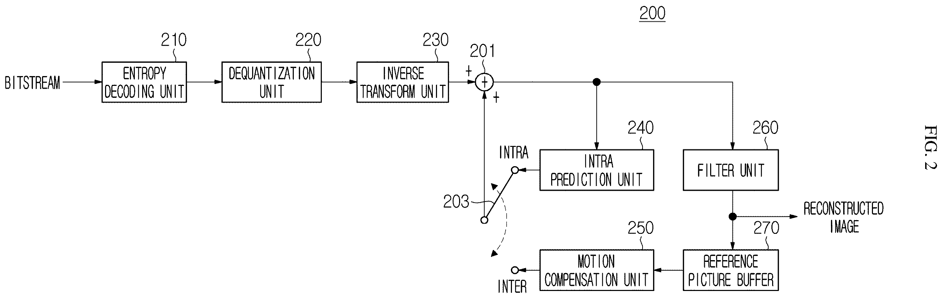

FIG. 2 is a block diagram showing a configuration of a decoding apparatus according to an embodiment of the present disclosure.

A decoding apparatus 200 may a decoder, a video decoding apparatus, or an image decoding apparatus.

Referring to FIG. 2, the decoding apparatus 200 may include an entropy decoding unit 210, a dequantization unit 220, an inverse transform unit 230, an intra prediction unit 240, a motion compensation unit 250, an adder 201, a switch 203, a filter unit 260, and a reference picture buffer 270.

The decoding apparatus 200 may receive a bitstream output from the encoding apparatus 100. The decoding apparatus 200 may receive a bitstream stored in a computer-readable recording medium, or may receive a bitstream that is streamed through a wired/wireless transmission medium. The decoding apparatus 200 may decode the bitstream in an intra mode or an inter mode. In addition, the decoding apparatus 200 may generate a reconstructed image generated through decoding or a decoded image, and output the reconstructed image or decoded image.

When a prediction mode used for decoding is an intra mode, the switch 203 may be switched to intra. Alternatively, when a prediction mode used for decoding is an inter mode, the switch 203 may be switched to inter.

The decoding apparatus 200 may obtain a reconstructed residual block by decoding the input bitstream, and generate a prediction block. When the reconstructed residual block and the prediction block are obtained, the decoding apparatus 200 may generate a reconstructed block that becomes a decoding target by adding the reconstructed residual block and the prediction block. The decoding target block may be called a current block.

The entropy decoding unit 210 may generate symbols by entropy decoding the bitstream according to a probability distribution. The generated symbols may include a symbol of a quantized level form. Herein, an entropy decoding method may be an inverse process of the entropy encoding method described above.

The entropy decoding unit 210 may change a one-dimensional vector-shaped coefficient into a two-dimensional block-shaped coefficient through a transform coefficient scanning method to decode a transform coefficient level (quantized level).

A quantized level may be dequantized in the dequantization unit 220, or inversely transformed in the inverse transform unit 230. The quantized level may be a result of dequantization and/or inverse transform, and may be generated as a reconstructed residual block. Herein, the dequantization unit 220 may apply a quantization matrix to the quantized level. The dequantization unit 220 and the inverse transform unit 230 applied to the decoding apparatus may apply the same technology as the dequantization unit 160 and inverse transform unit 170 applied to the aforementioned encoding apparatus.

When an intra mode is used, the intra prediction unit 240 may generate a prediction block by performing, on the current block, spatial prediction that uses a sample value of a block which has been already decoded around a decoding target block. The intra prediction unit 240 applied to the decoding apparatus may apply the same technology as the intra prediction unit 120 applied to the aforementioned encoding apparatus.

When an inter mode is used, the motion compensation unit 250 may generate a prediction block by performing, on the current block, motion compensation that uses a motion vector and a reference image stored in the reference picture buffer 270. The motion compensation unit 250 may generate a prediction block by applying an interpolation filter to a partial region within a reference image when the value of the motion vector is not an integer value. In order to perform motion compensation, it may be determined whether the motion compensation method of the prediction unit included in the corresponding coding unit is a skip mode, a merge mode, an AMVP mode, or a current picture reference mode based on the coding unit, and motion compensation may be performed according to each mode. The motion compensation unit 250 applied to the decoding apparatus may apply the same technology as the motion compensation unit 122 applied to the encoding apparatus described above.

The adder 201 may generate a reconstructed block by adding the reconstructed residual block and the prediction block. The filter unit 260 may apply at least one of inverse-LMCS, a deblocking filter, a sample adaptive offset, and an adaptive loop filter to the reconstructed block or reconstructed image. The filter unit 260 applied to the decoding apparatus may apply the same filtering technology as that applied to the filter unit 180 applied to the aforementioned encoding apparatus.

The filter unit 260 may output the reconstructed image. The reconstructed block or reconstructed image may be stored in the reference picture buffer 270 and used for inter prediction. A reconstructed block that has passed through the filter unit 260 may be a part of a reference image. That is, a reference image may be a reconstructed image composed of reconstructed blocks that have passed through the filter unit 260. The stored reference image may be used later in inter prediction or motion compensation.

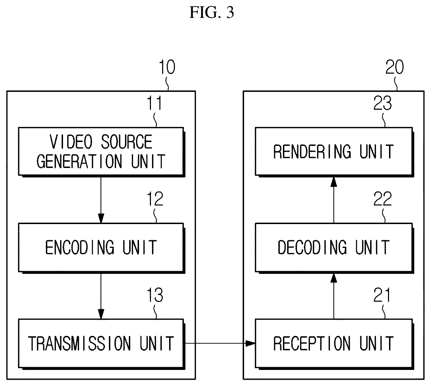

FIG. 3 is a diagram schematically showing a video coding system to which the present disclosure is applicable.

A video coding system according to an embodiment may include an encoding apparatus 10 and a decoding apparatus 20. The encoding apparatus 10 may transmit encoded video and/or image information or data to the decoding apparatus 20 in the form of a file or streaming through a digital storage medium or a network.

The encoding apparatus 10 according to an embodiment may include a video source generation unit 11, an encoding unit 12, and a transmission unit 13. The decoding apparatus 20 according to an embodiment may include a reception unit 21, a decoding unit 22, and a rendering unit 23. The encoding unit 12 may be called a video/image encoding unit, and the decoding unit 22 may be called a video/image decoding unit. The transmission unit 13 may be included in the encoding unit 12. The reception unit 21 may be included in the decoding unit 22. The rendering unit 23 may include a display unit, and the display unit may be configured as a separate device or an external component.

The video source generation unit 11 may obtain the video/image through a process of capturing, synthesizing, or generating the video/image. The video source generation unit 11 may include a video/image capture device and/or a video/image generation device. The video/image capture device may include, for example, one or more cameras, a video/image archive including previously captured video/image, etc. The video/image generation device may include, for example, a computer, a tablet, and a smartphone, etc., and may (electronically) generate the video/image. For example, a virtual video/image may be generated through a computer, etc., in which case the video/image capture process may be replaced with a process of generating related data.

The encoding unit 12 may encode the input video/image. The encoding unit 12 may perform a series of procedures such as prediction, transform, and quantization for compression and encoding efficiency. The encoding unit 12 may output encoded data (encoded video/image information) in the form of a bitstream. The detailed configuration of the encoding unit 12 may also be configured in the same manner as the encoding apparatus 100 of FIG. 1 described above.

The transmission unit 13 may transmit encoded video/image information or data output in the form of a bitstream to the reception unit 21 of the decoding apparatus 20 through a digital storage medium or a network in the form of a file or streaming. The digital storage medium may include various storage media such as USB, SD, CD, DVD, Blu-ray, HDD, SSD, etc. The transmission unit 13 may include an element for generating a media file through a predetermined file format and may include an element for transmission through a broadcasting/communication network. The reception unit 21 may extract/receive the bitstream from the storage medium or the network and transmit it to the decoding unit 22.

The decoding unit 22 may decode the video/image by performing a series of procedures such as dequantization, inverse transform, and prediction corresponding to the operation of the encoding unit 12. The detailed configuration of the decoding unit 22 may also be configured in the same manner as the above-described decoding apparatus 200 of FIG. 2.

The rendering unit 23 may render the decoded video/image. The rendered video/image may be displayed through the display unit.

In the present invention, various embodiments of improving coding efficiency through quantization index shifting are described.

A compression model is an unconstrained multi objective optimization problem with two objective functions of bit rate and distortion. In order for a solution of this optimization problem to satisfy a Karush-Kuhn-Tucker (KKT) condition, the sum of gradients for respective objective functions is to be 0. That is, for a compression model, a gradient for a bit rate and a gradient for a distortion are to be offset against each other. Accordingly, when a KKT condition is satisfied, the direction of one gradient may be changed to replace the other gradient.

The present disclosure proposes a quantization index shifting method for enhancing accuracy of a transformed coefficient that is generated as a result of dequantization. In the present disclosure, for quality improvement of a reconstructed image, a method is described for calculating a transformed coefficient through a weighted sum of a dequantized value of a quantization index shifted away from the zero point relative to an original quantization index and a dequantized value of the original quantization index. In addition, a method is proposed for effectively controlling the quantization index shifting method so that the quantization index shifting method becomes appropriate for various compression environments.

Hereinafter, a quantization index means a quantized transformed coefficient. In an encoding process, a transformed coefficient block is generated by transforming a difference block between an original block and a prediction block. In addition, a quantization index (quantized transformed coefficient) is determined by quantizing transformed coefficients of the transformed coefficient block. On the other hand, in a decoding process, a transformed coefficient is determined by inversely quantizing a quantization index, and a difference block of a current block is generated by inversely quantizing the transformed coefficient. Quantization index shifting of the present disclosure is applied to an encoding process and the dequantization of a decoding process.

Hereinafter, an embodiment of the quantization index shifting method will be described. Dependent quantization (DQ) is a quantization method that uses two scalar quantizers Q0 and Q1 that have different reconstruction levels. According to dependent quantization, quantizer information used for quantizing a current transformed coefficient is implicitly determined by parity of a transformed coefficient level preceding the current transformed coefficient in encoding/decoding order without signaling. More specifically, the value of an initial state is set to 0 at a beginning step of transform block coding, and switching between two scalar quantizers Q0 and Q1 is realized at an encoder/decoder through a state transition table with N identically defined states or an equivalent arithmetic operation. Herein, N is an arbitrary positive number. For example, N may be 4 or 8. Dependent quantization is a rate-distortion optimization (RDO)-based quantization that determines quantization indexes minimizing the rate-distortion cost for a transform block. Such a RDO-based quantization as the dependent quantization may be generalized by Equation 1 below.

[Equation 1]

$$ \boldsymbol{y}^* \;=\; \underset{\boldsymbol{y}}{\operatorname{argmin}}[\; R(\boldsymbol{y}) + \lambda D\big(\boldsymbol{x}, Q^{-1}(\boldsymbol{y})\big)] $$

In Equation 1, R is a bit rate function of a quantization index, $\lambda$ is a Lagrangian coefficient, and D is a distortion evaluation indicator. In addition, x is a real number coefficient, and y is a quantization index. A quantization index according to an arbitrary quantization function Q(.) may be defined as $\boldsymbol{y} = Q(\boldsymbol{x})$. In addition, an inversely quantized value of a quantization index according to an arbitrary dequantization function $Q^{-1}(.)$ may be defined as $\hat{x} = Q^{-1}(\boldsymbol{y})$.

[Equation 2]

$$ \boldsymbol{y} \leftarrow \boldsymbol{y} - \rho \nabla_{\boldsymbol{y}}\Big(D\big(\boldsymbol{x}, Q^{-1}(\boldsymbol{y})\big)\Big) $$

When quantization index y is shifted by a gradient of distortion as in Equation 2, distortion D decreases. However, there is no original data at a decoder, and thus it is impossible to know accurate distortion.

When the KKT condition (the gradient of a bit rate and that of a distortion add up to zero) is applied to Equation 1, if a solution obtained by RDO-based quantization is optimal, the condition as described in Equation 3 is to be satisfied. That is, because the bit rate is available at a decoder, a negative gradient for the bit rate may be used as a gradient for the distortion.

[Equation 3]

$$ \nabla_{\boldsymbol{y}}\big(R(\boldsymbol{y})\big) = -\lambda \nabla_{\boldsymbol{y}}\Big(D\big(\boldsymbol{x}, Q^{-1}(\boldsymbol{y})\big)\Big) $$

That is, a quantization index may be shifted using a gradient of bit rate as shown in Equation 4, instead of Equation 2. As the method of shifting a quantization index by Equation 4 is performed at dequantization step, an actual bit rate is not affected, and the quality of a reconstructed image is improved.

[Equation 4]

$$y \leftarrow y + \rho \nabla_y \big( R(y) \big)$$

When a quantization index is shifted, a shifting direction may be determined according to a value of the quantization index prior to shifting. For example, if the quantization index is 0, the gradient is 0, and thus no offset needs to be added. In addition, if the quantization index is greater than 0, the gradient is a positive number. On the other hand, if the quantization index is smaller than 0, the gradient is a negative number. Accordingly, the quantization index may be shifted as in Equation 5. Here, $\rho$ means a shift amount, and n means the number of coefficients for which quantization index shifting is applied.

According to an embodiment, when the gradient of a bit rate is computed at a decoder, the complexity of the decoder may increase. Accordingly, to reduce complexity, the gradient of a bit rate may be approximated to predetermined value $\rho$. For example, approximate value $\rho$ of a gradient of a bit rate may be determined as 1. According to an embodiment, approximate value $\rho$ may be determined as a value that is equal to or greater than 2.

[Equation 5]

$$\begin{cases} y_i \leftarrow y_i + \rho & y_i > 0 \\ y_i \leftarrow y_i - \rho & y_i < 0 \,, \qquad for \ \ i = 1..n \\ y_i \leftarrow y_i & y_i = 0 \end{cases}$$

In Equation 6, $\rho$ has a value of 1. Equation 6 describes an example where an existing quantization index is shifted by 1 in the direction opposite to the zero point.

[Equation 6]

$$y'_i = y_i + (y_i > 0 ? 1 : -1)$$

A reconstructed (transformed) coefficient may be calculated by applying dequantization to an existing quantization index ($Q^{-1}(y_i)$). In addition, according to Equation 6, a reconstructed coefficient of a quantization index, for which quantization index shifting is performed, may be calculated ($Q^{-1}(y'_i)$). In addition, final reconstructed transformed coefficient $\hat{x}$ according to quantization index shifting may be calculated as a weighted sum of $Q^{-1}(y_i)$ and $Q^{-1}(y'_i)$, as shown in Equation 7. According to Equation 5, quantization index shifting is performed only when the quantization index is not 0.

[Equation 7]

$$\hat{x} = \big( \omega_1 * Q^{-1}(y_i) + \omega_2 * Q^{-1}(y'_i) + \delta \big) \gg BitDepth$$

In Equation 7, BitDepth may mean a bit depth of an input image or mean an internal bit depth of Equation 7. In Equation 7, $\omega_1$ and $\omega_2$ mean weights of $Q^{-1}(y_i)$ and $Q^{-1}(y'_i)$, respectively. $\omega_1$ and $\omega_2$ may have a predetermined value according to an agreement between an encoder and a decoder. Alternatively, $\omega_1$ and $\omega_2$ may have a universal value derived through testing with various video contents. Alternatively, $\omega_1$ and $\omega_2$ may use different values according to a quantization parameter (QP), the value or absolute value of a quantization index, a position of a current block, a size of the current block (width or/and height), a position of a subblock, a position of a sample (or coefficient) within the current/subblock, the number of non-zero samples within the current/subblock, and other encoding information. As another example, $\omega_1$ and $\omega_2$ may be determined based on the value or probability of a neighboring sample (or coefficient). Herein, $\omega_1 \geq 0$, $\omega_2 \geq 0$, and $\omega_1 + \omega_2 = 2^{BitDepth}$.

According to an embodiment, $\omega_1$ and $\omega_2$ may be determined by the absolute value of a quantization index. For example, when the quantization index is 0, $\omega_2$ may be determined as 0. Accordingly, when the quantization index is 0, quantization index shifting is not performed. In addition, $\omega_1$ and $\omega_2$ may be configured to increase and decrease, respectively, as the absolute value of a non-zero quantization index increases. Accordingly, as the absolute value of a non-zero quantization index decreases, the change amount of a transformed coefficient due to quantization index shifting increases, and as the absolute value increases, the change amount of the transformed coefficient due to quantization index shifting decreases. In addition, according to an embodiment, when the absolute value of a quantization index is greater than a predetermined value, $\omega_2$ may be set to 0 so that quantization index shifting is configured not to be performed.

$\delta$ of Equation 7 means an offset, and the effect of rounding, ceiling or floor may be expected through adjustment of an offset value. $\delta\delta$ may have a predetermined value according to an agreement between an encoder and a decoder. $\delta\delta$ may have a universal value derived through testing with various video contents. $\delta$ may use different values according to a quantization parameter (QP), the value or absolute value of a quantization index, a position of a current block, a size of the current block (width or/and height), a position of a subblock, a position of a sample (or coefficient) within the current/sub-block, the number of non-zero samples within the current/subblock, and other encoding information. As another example, $\delta$ may be determined based on the value or probability of a neighboring sample (or coefficient). Herein, $\delta$ is an integer.

A value of final reconstructed coefficient $\hat{x}$ of Equation 7 may be constrained to fall within a predetermined range through clipping or similar techniques.

Whether or not the proposed quantization index shifting is applied may be determined according to a quantization parameter, the value or absolute value of a quantization index according to the quantization parameter, a position of a current block, the width or/and height of the current block, a position of a subblock, a position of a sample (or coefficient) within the current/subblock, the number of non-zero samples within the current/subblock, and other encoding information.

As another example, a syntax element indicating whether or not the proposed quantization index shifting is applied may be defined at a high level (a video parameter set (VPS), a sequence parameter set (SPS), a picture parameter set (PPS), an adaptation parameter set (APS), a picture header, a slice header, etc.). As another example, a syntax element indicating whether or not quantization index shifting is applied may be defined at a low level (a coding unit, a transform unit, a subblock, etc.). Accordingly, whether or not quantization index shifting is applied may be determined by a plurality of high-level and/or low-level components indicating whether or not quantization index shifting is applied.

As a value of a reconstructed coefficient is changed through quantization index shifting, quantization index shifting needs to be controlled so that it is not performed in lossless or near-lossless compression environment. One or more of the following methods may be used to control quantization index shifting.

According to a quantization parameter, whether or not to apply quantization index shifting may be controlled. According to an embodiment, in a lossless compression environment, a quantization parameter may be set to be equal to or smaller than an arbitrary value of M. Herein, M is an arbitrary positive number. For example, M may be 0 or 4. If a quantization parameter of a current block is an arbitrary value indicating a lossless compression environment, a decoder may infer, based on the quantization parameter, that quantization index shifting is not applied for a predetermined quantization parameter unit.

In a near-lossless compression environment, a quantization parameter may be set to be equal to or smaller than an arbitrary value of N. Herein, N is an arbitrary positive number. Accordingly, if a quantization parameter of a current block is an arbitrary value indicating a near-lossless compression environment, a decoder may infer, based on the quantization parameter, that quantization index shifting is not applied for a predetermined quantization parameter unit.

Whether or not quantization index shifting is applied may be determined based on a syntax element that means a lossless/near-lossless compression environment. For example, when a syntax element indicating whether or not lossless/near-lossless compression is performed has a value of 1, quantization index shifting may not be applied. As another example, a combination of a plurality of syntax elements may be used to indicate whether or not lossless/near-lossless compression is performed. For example, when a combination of syntax elements indicates lossless/near-lossless compression, quantization index shifting may not be applied.

One or more of the following methods may be used to control quantization index shifting in a lossy compression environment.

Quantization index shifting may be controlled using the magnitude of a value or absolute value of a quantization index. For example, when an absolute value of a quantization index is equal to or greater than an arbitrary value, quantization index shifting may not be applied.

Quantization index shifting may be controlled based on a two-dimensional position of a quantization index within a block. For example, for location coordinate (x, y), quantization index shifting may not be applied to positions with $x \leq P_0$ or/and $y \leq P_1$, and quantization index shifting may be applied to other positions. Herein, $P_0$ and $P_1$ may have a value of 0 or a positive integer.

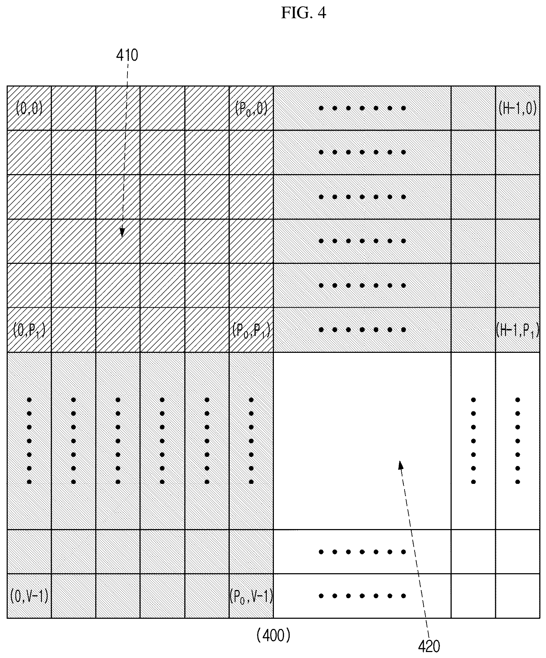

FIG. 4 shows an application area of quantization index shifting, which is defined by one reference position, when quantization index shifting is controlled based on a two-dimensional position of a quantization index.

According to FIG. 4, $P_0$, which represents a horizontal length of an area 410 to which quantization index shifting is not applied, is set not to be greater than horizontal length H of a block 400. In addition, $P_1$, which represents a vertical length of the area 410 to which quantization index shifting is not applied, is set not to be greater than vertical length V of the block 400. The area 410 may be configured to include a sample that satisfies both $x \leq P_0$ and $y \leq P_1$. Alternatively, the area 410 may be configured to include a sample that satisfies at least one of $x \leq P_0$ and $y \leq P_1$. On the other hand, an area 420, to which quantization index shifting is applied, corresponds to the remainder of the block 400 except for the area 410. $P_0$ and $P_1$ may be determined based on a size of the block 400, a prediction mode, a transform mode, and the number of non-zero samples within the block.

As another example, for a predetermined range of positions, whether or not quantization index shifting is applied may be controlled by using two or more location coordinates. For example, quantization index shifting is applied to an area defined by position $(P_0, P_1)$ and position $(Q_0, Q_1)$, and quantization index shifting is not applied to remaining areas.

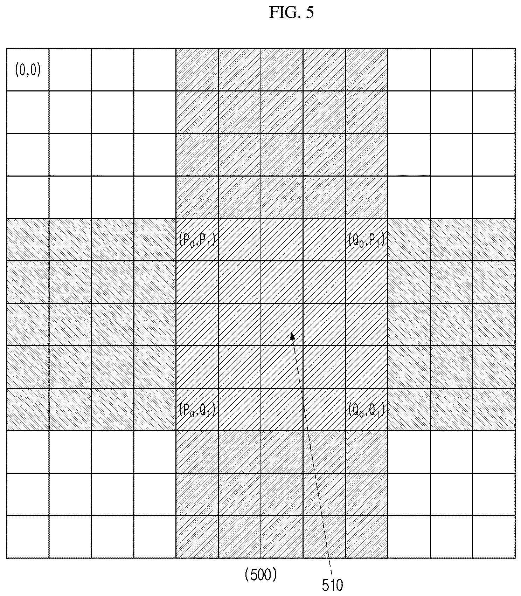

FIG. 5 shows an application area of quantization index shifting, which is defined by two reference positions, when quantization index shifting is controlled based on a two-dimensional position of a quantization index.

According to FIG. 5, position $(P_0, P_1)$ and position $(Q_0, Q_1)$ are defined in a block 500. In addition, an area 510, to which quantization index shifting is applied, may be configured to include a sample that satisfies both $P_0 \leq x \leq Q_0$ and $P_1 \leq y \leq Q_1$. Alternatively, the area 510 may be configured to include a sample that satisfies at least one of $P_0 \leq x \leq Q_0$ and $P_1 \leq y \leq Q_1$. Quantization index shifting is not applied to samples outside the area 510. $P_0$, $P_1$, $Q_0$ and $Q_1$ may be determined based on a size of the block 500, a prediction mode, a transform mode, and the number of non-zero samples within the block.

Quantization index shifting may be controlled based on a one-dimensional position index of a quantization index within a block. For a position of each coefficient within a block, a two-dimensional coordinate value may be replaced by a one-dimensional position index through an arbitrary scanning method. In addition, whether or not quantization index shifting is applied may be determined based on the one-dimensional position index. For example, when a one-dimensional position index is equal to or smaller than an arbitrary value, quantization index shifting may not be applied, and otherwise, quantization index shifting may be applied. As another example, according to whether or not the one-dimensional position index is located within a predetermined range, whether or not quantization index shifting is applied may be determined.

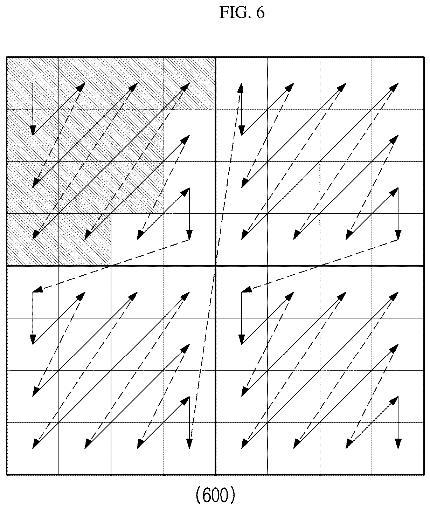

FIG. 6 shows an example of a scanning method of a transform block for describing a quantization index shifting control method based on a one-dimensional position index.

According to FIG. 6, a transform block 600 is partitioned into 4x4 sized subblocks. In addition, a transform coefficient of each subblock is scanned in diagonal direction. Accordingly, a one-dimensional position index is allocated to each of 64 transform coefficients of the transform block 600 according to the scan order of FIG. 6. In addition, quantization index shifting may not be applied to a transform coefficient which has a one-dimensional position index equal to or smaller than a predetermined value, and otherwise, quantization index shifting may be applied. If the predetermined value is 12, quantization index shifting may not be applied to the transform coefficients of the gray area of the transform block 600, and quantization index shifting may be applied to those of the remaining area. The predetermined value may be determined based on a size of the block 600, a prediction mode, a transform mode, and the number of non-zero samples within the block.

The scan order of FIG. 6 is merely one example, and vertical scan, horizontal scan, or zigzag scan may be applied. In addition, a subblock may have a size of 8x8 or 16x16.

Whether or not quantization index shifting is applied may be determined based on a syntax element that indicates whether or not a specific encoding technique (e.g., an arbitrary prediction technique, a filter technique, etc.) is enabled. For example, when a syntax element that indicates whether or not an arbitrary encoding technique is enabled indicates a predetermined value, quantization index shifting may not be applied. As another example, when values of two or more syntax elements are a combination of (predetermined) specific values, quantization index shifting may not be applied. The syntax element may be obtained at a high level and/or a low level.

Quantization index shifting may be controlled by using a quantization parameter. For example, when a quantization parameter of a current block belongs to a specific quantization parameter range, quantization index shifting may not be applied at a decoder.

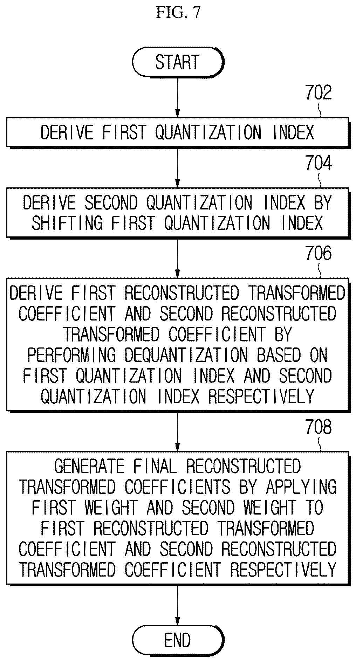

FIG. 7 shows an embodiment of a method for generating a transformed coefficient by quantization index shifting.

At step S702, a first quantization index is derived.

At step S704, a second quantization index is derived by shifting the first quantization index.

According to an embodiment, the second quantization index is derived by shifting the first quantization index by a predetermined integer value. An absolute value of the predetermined integer value may be 1. In addition, the sign of the predetermined integer value may be determined to be identical to that of the first quantization index. When the quantization index is 0, quantization index shifting is not performed.

According to an embodiment, when shifting of the first quantization index is determined, the second quantization index may be derived by shifting the first quantization index. Accordingly, prior to the shifting of the first quantization index, whether or not to shift the first quantization index may be determined.

According to an embodiment, in the determining of whether or not to shift the first quantization index, at least one syntax element indicating whether or not to apply the quantization index shifting may be obtained from a bitstream, and whether or not to shift the first quantization index may be determined based on the at least one syntax element. The at least one syntax element may be encoded in at least one data unit of a video parameter set, a sequence parameter set, a picture parameter set, an adaptive parameter set, a picture header, a slice header, an encoding unit, a transform unit, and a subblock unit.

According to an embodiment, whether or not to shift the first quantization index may be determined based on a quantization parameter. When the quantization parameter has a value corresponding to lossless compression environment or near-lossless compression environment, the shifting of the first quantization index may be determined not to be applied. Alternatively, when the quantization parameter is included in a predetermined quantization parameter range, the shifting of the first quantization index may be determined not to be applied.

According to an embodiment, when an absolute value of the first quantization index is equal to or greater than a predetermined value, the shifting of the first quantization index may be determined not to be applied.

According to an embodiment, whether or not to shift the first quantization index may be determined based on a two-dimensional position of the first quantization index within a block. As an example, when an x component of the two-dimensional position of the first quantization index is smaller than an x component of a predetermined reference position and a y component of the two-dimensional position of the first quantization index is smaller than a y component of the predetermined reference position, the shifting of the first quantization index may be determined not to be applied. Alternatively, when an x component of the two-dimensional position of the first quantization index is smaller than an x component of a predetermined reference position or a y component of the two-dimensional position of the first quantization index is smaller than a y component of the predetermined reference position, the shifting of the first quantization index may be determined not to be applied.

According to an embodiment, whether or not to shift the first quantization index may be determined based on a one-dimensional position index of the first quantization index within a block. The one-dimensional position index is transformed from a two-dimensional coordinate value according to an arbitrary scanning method. As an example, when the one-dimensional position index of the first quantization index is smaller than a predetermined value, quantization index shifting may be determined not to be applied.

Whether or not to shift the first quantization index may be determined based on a prediction mode or filtering mode that is applied to a current block.

At step S706, a first reconstructed transformed coefficient and a second reconstructed transformed coefficient are derived by performing dequantization on the first quantization index and the second quantization index, respectively.

At step S708, final reconstructed transformed coefficients are generated by applying a first weight and a second weight to the first reconstructed transformed coefficient and the second reconstructed transformed coefficient, respectively.

According to an embodiment, the first weight and the second weight may be determined according to a quantization parameter, a value of the first quantization index, a position of a current block, a size of the current block, a position of a subblock, a position of a sample of the current block or the subblock, and the number of non-zero samples of the current or subblock.

The method of FIG. 7 for generating a transformed coefficient according to quantization index shifting may be used in dequantization of image decoding. In image encoding, a process is performed for generating a reconstructed residual signal of a block by inversely quantizing and inversely transforming transform coefficient information of a block that is generated by transforming and quantizing an original residual signal of the block. Accordingly, the method of FIG. 7 for generating a transformed coefficient according to quantization index shifting may be used in dequantization of image encoding.

That is, at step S702 to step S708, a current block may be encoded or decoded by the method for generating a transformed coefficient according to quantization index shifting. In addition, a bitstream generated by an encoder according to the method performed at step S702 to step S708 may be stored in a recoding medium or transmitted outside the encoder.

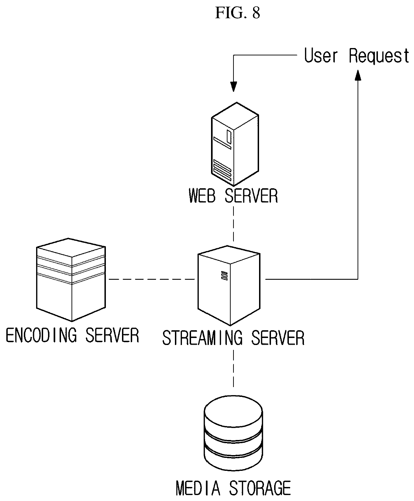

FIG. 8 illustrates a content streaming system to which an embodiment according to the present disclosure is applicable.

As illustrated in FIG. 15, a content streaming system to which an embodiment of the present disclosure is applied may largely include an encoding server, a streaming server, a web server, a media storage, a user device, and a multimedia input device.

The encoding server compresses content received from multimedia input devices such as smartphones, cameras, CCTVs, etc. into digital data to generate a bitstream and transmits it to the streaming server. As another example, if multimedia input devices such as smartphones, cameras, CCTVs, etc. directly generate a bitstream, the encoding server may be omitted.

The bitstream may be generated by an image encoding method and/or an image encoding apparatus to which an embodiment of the present disclosure is applied, and the streaming server may temporarily store the bitstream in the process of transmitting or receiving the bitstream.

The streaming server transmits multimedia data to a user device based on a user request via a web server, and the web server may act as an intermediary that informs the user of any available services. When a user requests a desired service from the web server, the web server transmits it to the streaming server, and the streaming server may transmit multimedia data to the user. At this time, the content streaming system may include a separate control server, and in this case, the control server may control commands/responses between devices within the content streaming system.

The streaming server may receive content from media storage and/or an encoding server. For example, when receiving content from the encoding server, the content may be received in real time. In this case, in order to provide a smooth streaming service, the streaming server may store the bitstream for a certain period of time.

Examples of the user devices may include mobile phones, smartphones, laptop computers, digital broadcasting terminals, personal digital assistants (PDAs), portable multimedia players (PMPs), navigation devices, slate PCs, tablet PCs, ultrabooks, wearable devices (e.g., smartwatches, smart glasses, HMDs), digital TVs, desktop computers, digital signage, etc.

Each server in the above content streaming system may be operated as a distributed server, in which case data received from each server may be distributed and processed.

The above embodiments may be performed in the same or corresponding manner in the encoding apparatus and the decoding apparatus. In addition, an image may be encoded/decoded using at least one or a combination of at least one of the above embodiments.

The order in which the above embodiments are applied may be different in the encoding apparatus and the decoding apparatus. Alternatively, the order in which the above embodiments are applied may be the same in the encoding apparatus and the decoding apparatus.

The above embodiments may be performed for each of the luma and chroma signals. Alternatively, the above embodiments for the luma and chroma signals may be performed identically.

In the above-described embodiments, the methods are described based on the flowcharts with a series of steps or units, but the present disclosure is not limited to the order of the steps, and rather, some steps may be performed simultaneously or in different order with other steps. In addition, it should be appreciated by one of ordinary skill in the art that the steps in the flowcharts do not exclude each other and that other steps may be added to the flowcharts or some of the steps may be deleted from the flowcharts without influencing the scope of the present disclosure.

The embodiments may be implemented in a form of program instructions, which are executable by various computer components, and recorded in a computer-readable recording medium. The computer-readable recording medium may include stand-alone or a combination of program instructions, data files, data structures, etc. The program instructions recorded in the computer-readable recording medium may be specially designed and constructed for the present disclosure, or well-known to a person of ordinary skill in the computer software technology field.

A bitstream generated by the encoding method according to the above embodiment may be stored in a non-transitory computer-readable recording medium. In addition, a bitstream stored in the non-transitory computer-readable recording medium may be decoded by the decoding method according to the above embodiment.

Examples of the computer-readable recording medium include magnetic recording media such as hard disks, floppy disks, and magnetic tapes; optical data storage media such as CD-ROMs or DVD-ROMs; magneto-optimum media such as floptical disks; and hardware devices, such as read-only memory (ROM), random-access memory (RAM), flash memory, etc., which are particularly structured to store and implement the program instruction. Examples of the program instructions include not only a mechanical language code formatted by a compiler but also a high-level language code that may be implemented by a computer using an interpreter. The hardware devices may be configured to be operated by one or more software modules or vice versa to conduct the processes according to the present disclosure.

Although the present disclosure has been described in terms of specific items such as detailed elements as well as the limited embodiments and the drawings, they are only provided to help more general understanding of the invention, and the present disclosure is not limited to the above embodiments. It will be appreciated by those skilled in the art to which the present disclosure pertains that various modifications and changes may be made from the above description.

Therefore, the spirit of the present disclosure shall not be limited to the above-described embodiments, and the entire scope of the appended claims and their equivalents will fall within the scope and spirit of the invention.

**Industrial Applicability**

The present disclosure may be used in an apparatus for encoding/decoding an image and a recording medium for storing a bitstream.

**Claims**

**1.** A method for decoding an image, the method comprising:

deriving a first quantization index;
deriving a second quantization index by shifting the first quantization index;
deriving a first reconstructed transformed coefficient and a second reconstructed transformed coefficient by performing dequantization on the first quantization index and the second quantization index respectively; and generating final reconstructed transformed coefficients by applying a first weight and a second weight to the first reconstructed transformed coefficient and the second reconstructed transformed coefficient respectively.

2. The method of claim 1, wherein the second quantization index is derived by shifting the first quantization index by a predetermined integer value.

3. The method of claim 2, wherein an absolute value of the predetermined integer value is 1.

4. The method of claim 2, wherein a sign of the predetermined integer value is determined to be identical to a sign of the first quantization index.

5. The method of claim 1, wherein the first weight and the second weight are determined according to a quantization parameter, a value of the first quantization index, a position of a current block, a size of the current block, a position of a subblock, a position of a sample of the current block or the subblock, and the number of non-zero samples of the current or subblock.

6. The method of claim 1, further comprising determining whether or not to shift the first quantization index, wherein when the first quantization index is determined to be shifted, the second quantization index is derived by shifting the first quantization index.

7. The method of claim 6, wherein in the determining of whether or not to shift the first quantization index, at least one syntax element indicating whether or not to apply the quantization index shifting is obtained from a bitstream, and whether or not to shift the first quantization index is determined based on the at least one syntax element.

8. The method of claim 7, wherein the at least one syntax element is encoded in at least one data unit of a video parameter set, a sequence parameter set, a picture parameter set, an adaptive parameter set, a picture header, a slice header, an encoding unit, a transform unit, and a subblock unit.

9. The method of claim 6, wherein whether or not to shift the first quantization index is determined based on a quantization parameter.

10. The method of claim 9, wherein when the quantization parameter has a value corresponding to lossless compression environment or near-lossless compression environment, the shifting of the first quantization index is determined not to be applied.

11. The method of claim 9, wherein when the quantization parameter is included in a predetermined quantization parameter range, the shifting of the first quantization index is determined not to be applied.

12. The method of claim 6, wherein when an absolute value of the first quantization index is equal to or greater than a predetermined value, the shifting of the first quantization index is determined not to be applied.

13. The method of claim 6, wherein whether or not to shift the first quantization index is determined based on a two-dimensional position of the first quantization index within a block.

14. The method of claim 13, wherein when an x component of the two-dimensional position of the first quantization index is smaller than an x component of a predetermined reference position and a y component of the two-dimensional position of the first quantization index is smaller than a y component of the predetermined reference position, the shifting of the first quantization index is determined not to be applied.

15. The method of claim 6, wherein whether or not to shift the first quantization index is determined based on a one-dimensional position index of the first quantization index within a block. and wherein the one-dimensional position index is transformed from a two-dimensional coordinate value according to an arbitrary scanning method.

16. The method of claim 15, wherein when the one-dimensional position index of the first quantization index is smaller than a predetermined value, the quantization index shifting is determined not to be applied.

17. The method of claim 6, wherein whether or not to shift the first quantization index is determined based on a prediction mode or filtering mode that is applied to a current block.

18. A method for encoding an image, the method comprising:

obtaining a first quantization index;
deriving a second quantization index by shifting the first quantization index;
deriving a first reconstructed transformed coefficient and a second reconstructed transformed coefficient by performing dequantization on the first quantization index and the second quantization index respectively; and
generating final reconstructed transformed coefficients by applying a first weight and a second weight to the first reconstructed transformed coefficient and the second reconstructed transformed coefficient respectively.

19. A computer-readable recording medium for storing a bitstream generated by a method for encoding an image, wherein the method for encoding an image comprises:

obtaining a first quantization index;
deriving a second quantization index by shifting the first quantization index;
deriving a first reconstructed transformed coefficient and a second reconstructed transformed coefficient by performing dequantization on the first quantization index and the second quantization index respectively; and
generating final reconstructed transformed coefficients by applying a first weight and a second weight to the first reconstructed transformed coefficient and the second reconstructed transformed coefficient respectively.

20. A method for transmitting a bitstream, which is generated by a method for encoding an image, the method comprising:

encoding an image based on the method for encoding an image; and
transmitting a bitstream including the encoded image,
wherein the method for encoding an image comprises:

obtaining a first quantization index;
deriving a second quantization index by shifting the first quantization index;
deriving a first reconstructed transformed coefficient and a second reconstructed transformed coefficient by performing dequantization on the first quantization index and the second quantization index respectively; and
generating final reconstructed transformed coefficients by applying a first weight and a second weight to the first reconstructed transformed coefficient and the second reconstructed transformed coefficient respectively.

EP 4 657 854 A1

FIG. 1

FIG. 2

FIG. 3

FIG. 4

FIG. 5

(500)          510

FIG. 6

(600)

FIG. 7

```
                    ┌─────────────┐
                    │    START    │
                    └──────┬──────┘
                           │                      702
                           ▼
        ┌──────────────────────────────────────┐
        │     DERIVE FIRST QUANTIZATION INDEX   │
        └──────────────────┬───────────────────┘
                           │                      704
                           ▼
        ┌──────────────────────────────────────┐
        │   DERIVE SECOND QUANTIZATION INDEX BY │
        │    SHIFTING FIRST QUANTIZATION INDEX  │
        └──────────────────┬───────────────────┘
                           │                      706
                           ▼
        ┌──────────────────────────────────────┐
        │DERIVE FIRST RECONSTRUCTED TRANSFORMED │
        │  COEFFICIENT AND SECOND RECONSTRUCTED │
        │     TRANSFORMED COEFFICIENT BY        │
        │  PERFORMING DEQUANTIZATION BASED ON   │
        │  FIRST QUANTIZATION INDEX AND SECOND  │
        │   QUANTIZATION INDEX RESPECTIVELY     │
        └──────────────────┬───────────────────┘
                           │                      708
                           ▼
        ┌──────────────────────────────────────┐
        │      GENERATE FINAL RECONSTRUCTED     │
        │  TRANSFORMED COEFFICIENTS BY APPLYING │
        │    FIRST WEIGHT AND SECOND WEIGHT TO  │
        │    FIRST RECONSTRUCTED TRANSFORMED    │
        │  COEFFICIENT AND SECOND RECONSTRUCTED │
        │  TRANSFORMED COEFFICIENT RESPECTIVELY │
        └──────────────────┬───────────────────┘
                           │
                           ▼
                    ┌─────────────┐
                    │     END     │
                    └─────────────┘
```

FIG. 8

User Request

WEB SERVER

ENCODING SERVER  STREAMING SERVER

MEDIA STORAGE

## INTERNATIONAL SEARCH REPORT

| International application No. |
| --- |
| **PCT/KR2024/007011** |

| A. | CLASSIFICATION OF SUBJECT MATTER |
| --- | --- |

**H04N 19/124**(2014.01)i; **H04N 19/70**(2014.01)i; **H04N 19/19**(2014.01)i; **H04N 19/147**(2014.01)i; **H04N 19/184**(2014.01)i

According to International Patent Classification (IPC) or to both national classification and IPC

| B. | FIELDS SEARCHED |
| --- | --- |

Minimum documentation searched (classification system followed by classification symbols)

H04N 19/124(2014.01); H04N 19/103(2014.01); H04N 19/105(2014.01); H04N 19/12(2014.01); H04N 19/126(2014.01); H04N 19/13(2014.01); H04N 19/147(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 양자화(quantization), 인덱스(index), 시프팅(shifting), 가중(weight), 변환(transform), 계수(coefficient)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2022-0043215 A (TENCENT AMERICA LLC) 05 April 2022 (2022-04-05)<br>See paragraphs [0062]-[0065], [0068], [0078], [0104], [0129]-[0130] and [0147]; claim 1; and figures 2-3. | 1-20 |
| Y | BALCILAR, Muhammet et al. AHG12 Shifting Quantizer Center. JVET-AD0251-v2, Joint Video Experts Team (JVET) of ITU-T SG 16 WP 3 and ISO/IEC JTC 1/SC 29, 30th Meeting. Antalya, TR. pp. 1-3, 23 April 2023.<br>See page 2. | 1-20 |
| Y | KR 10-2022-0017372 A (HYUNDAI MOTOR COMPANY et al.) 11 February 2022 (2022-02-11)<br>See paragraph [0052]; and claims 1 and 5. | 5,13-17 |
| A | KR 10-2021-0003125 A (FRAUNHOFER-GESELLSCHAFT ZUR FOERDERUNG DER ANGEWANDTEN FORSCHUNG E.V.) 11 January 2021 (2021-01-11)<br>See claim 56. | 1-20 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **22 August 2024** | **23 August 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2024/007011** |

### C. DOCUMENTS CONSIDERED TO BE RELEVANT

| Category* | Citation of document, with indication, where appropriate, of the relevant passages | Relevant to claim No. |
|---|---|---|
| A | KR 10-2012-0084168 A (SAMSUNG ELECTRONICS CO., LTD.) 27 July 2012 (2012-07-27)<br>See claims 1-10. | 1-20 |

Form PCT/ISA/210 (second sheet) (July 2022)

## INTERNATIONAL SEARCH REPORT
### Information on patent family members

International application No.

**PCT/KR2024/007011**

| Patent document cited in search report | | | Publication date (day/month/year) | Patent family member(s) | | | Publication date (day/month/year) |
|---|---|---|---|---|---|---|---|
| KR | 10-2022-0043215 | A | 05 April 2022 | CN | 117880506 | A | 12 April 2024 |
| | | | | EP | 4008110 | A1 | 08 June 2022 |
| | | | | JP | 2023-504800 | A | 07 February 2023 |
| | | | | JP | 7278681 | B2 | 22 May 2023 |
| | | | | KR | 10-2024-0010544 | A | 23 January 2024 |
| | | | | KR | 10-2626280 | B1 | 18 January 2024 |
| | | | | US | 11750812 | B2 | 05 September 2023 |
| | | | | US | 2023-0336727 | A1 | 19 October 2023 |
| | | | | WO | 2022-019942 | A1 | 27 January 2022 |
| KR | 10-2022-0017372 | A | 11 February 2022 | CN | 116097648 | A | 09 May 2023 |
| | | | | US | 2023-0283768 | A1 | 07 September 2023 |
| | | | | WO | 2022-031003 | A1 | 10 February 2022 |
| KR | 10-2021-0003125 | A | 11 January 2021 | CN | 115967800 | A | 14 April 2023 |
| | | | | EP | 3777153 | A1 | 17 February 2021 |
| | | | | JP | 2023-052667 | A | 11 April 2023 |
| | | | | JP | 7219284 | B2 | 07 February 2023 |
| | | | | KR | 10-2023-0085229 | A | 13 June 2023 |
| | | | | KR | 10-2543505 | B1 | 14 June 2023 |
| | | | | US | 11533486 | B2 | 20 December 2022 |
| | | | | US | 2023-0075174 | A1 | 09 March 2023 |
| | | | | WO | 2019-185769 | A1 | 03 October 2019 |
| KR | 10-2012-0084168 | A | 27 July 2012 | US | 2012-0183051 | A1 | 19 July 2012 |

Form PCT/ISA/210 (patent family annex) (July 2022)